# EUROPEAN PATENT APPLICATION

(11) **EP 4 624 664 A1**
(43) Date of publication of application: **01.10.2025**
(21) Application number: 23894152.0
(22) Date of filing: 16.05.2023
(51) Int. Cl.: E01C 7/18, E01C 7/32, E01C 23/00

(54) **METHOD FOR REPAIRING ASPHALT PAVEMENT**

(30) Priority: 22.11.2022 JP 2022186864
(71) Applicant: Maeda Road Construction Co., Ltd, Tokyo 141-8665 (JP)
(72) Inventor: TANIGUCHI, Hiroshi, Tokyo 141-8665 (JP); HATAKEYAMA, Keigo, Tokyo 141-8665 (JP); ODA, Takeru, Tokyo 141-8665 (JP)
(74) Representative: Kraus & Lederer PartGmbB
(86) International application number: PCT/JP2023/018331
(87) International publication number: WO 2024/111136

(57) **Abstract**

Provided is a method for repairing asphalt pavement comprising: a spreading step of spreading an aggregate 20 over a floor slab 1; a mixing step of obtaining a binder mixture 30 by adding and mixing an alkaline additive to and with a binder containing an asphalt and a lubricative solidification material; a filling step of pouring the binder mixture 30 into a place where the aggregate 20 is spread; and a curing step of curing the aggregate 20 and the binder mixture 30 to obtain a paved body.

## Description

### TECHNICAL FIELD

The present invention relates to a method for repairing asphalt pavement.

### BACKGROUND ART

Known asphalt pavements include a guss asphalt pavement formed by pouring a guss asphalt mixture having fluidity, and spreading the mixture. The guss asphalt pavement is used as waterproof layers for floor slabs, and has high watertightness and flexibility. The guss asphalt mixture used in the guss asphalt pavement is a mixture of a mixed asphalt of an asphalt and a modifier, such as Trinidad lake asphalt or thermoplastic elastomer, with a coarse aggregate, a fine aggregate, and a filler. To ensure work efficiency and fluidity enabling pouring, the guss asphalt mixture is transported in a cooker vehicle including a heating and mixing apparatus called cooker while it is being stirred under heating at a high temperature of 200°C or higher (for example, Patent Document 1).

### RELATED ART DOCUMENTS

### PATENT DOCUMENTS

Patent Document 1: JP 2014-031619 A

### SUMMARY OF THE INVENTION

### PROBLEM TO BE SOLVED BY THE INVENTION

As in Patent Document 1, to stir the guss asphalt mixture in a cooker vehicle, due to the stirring mechanism, it is necessary to produce the mixture in at least an amount of about a half of the maximum load capacity of the cooker vehicle (which amounts to about 4 tons). However, when the asphalt pavement is repaired at a small scale, the amount of the guss asphalt mixture used is mostly less than 1 ton. Thus, small-scale asphalt repairing using a cooker vehicle causes a large amount of waste materials, or increases cost of repairs.

The present invention has been proposed in consideration of such circumstances. An object of the present invention is to provide a method for repairing asphalt pavement which can suppress production of waste materials and reduce cost of repairs.

### MEANS FOR SOLVING PROBLEMS

The present inventor, who has conducted extensive research to solve the above problems, has found that the above problems can be solved by a method for repairing asphalt pavement comprising: a spreading step of spreading an aggregate over a floor slab; a mixing step of obtaining a binder mixture by adding and mixing an alkaline additive to and with a binder containing an asphalt and a lubricative solidification material; a filling step of pouring the binder mixture into a place where the aggregate is spread; and a curing step of curing the aggregate and the binder mixture to obtain a paved body, and has completed the present invention.

Specifically, according to Mode 1 of the present invention, a method for repairing asphalt pavement is provided, the method comprising: a spreading step of spreading an aggregate over a floor slab; a mixing step of obtaining a binder mixture by adding and mixing an alkaline additive to and with a binder containing an asphalt and a lubricative solidification material; a filling step of pouring the binder mixture containing the asphalt into a place where the aggregate is spread; and a curing step of curing the aggregate and the binder mixture to obtain a paved body.

According to Mode 2 of the present invention, provided is the method for repairing asphalt pavement according to Mode 1, wherein the aggregate used is a single-sized crushed stone in which the mass percentage of the single-sized crushed stone passing through a 4.75-mm sieve is 3% or less.

According to Mode 3 of the present invention, provided is the method for repairing asphalt pavement according to Mode 1 or 2, wherein in the filling step, the binder mixture is poured in an amount of 10 to 50 parts by weight relative to 100 parts by weight of the aggregate spread over the floor slab.

According to Mode 4 of the present invention, provided is the method for repairing asphalt pavement according to any one of Modes 1 to 3, wherein the lubricative solidification material contains a fatty acid.

According to Mode 5 of the present invention, provided is the method for repairing asphalt pavement according to any one of Modes 1 to 4, wherein the lubricative solidification material contains a tall oil fatty acid and/or a tall oil fatty acid ester.

According to Mode 6 of the present invention, provided is the method for repairing asphalt pavement according to any one of Modes 1 to 5, wherein the lubricative solidification material contains a C6-C30 branched saturated fatty acid.

### EFFECTS OF INVENTION

According to the present invention, paving is performed by pouring a binder containing an asphalt into a place where an aggregate is spread. Thereby, paving can be performed by preparing the aggregate and the binder only in amounts needed according to the scale of repair, and thus, production of waste materials during repairing of the asphalt pavement can be suppressed and cost of repairs can be reduced.

### BRIEF DESCRIPTION OF DRAWINGS

[Fig. 1]

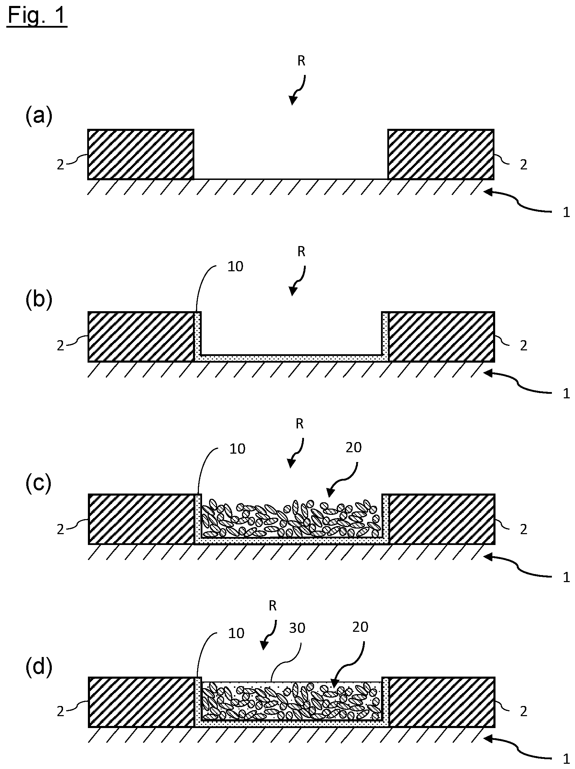

Fig. 1(a) is a schematic cross-sectional view showing a target to be paved according to an embodiment of the present invention. Fig. 1(b) is a schematic cross-sectional view showing a step of applying an adhesive according to the embodiment of the present invention. Fig. 1(c) is a schematic cross-sectional view showing a step of spreading an aggregate according to the embodiment of the present invention. Fig. 1(d) is a schematic cross-sectional view showing a step of pouring a binder mixture according to the embodiment of the present invention.

### DESCRIPTION OF EMBODIMENTS

The method for repairing asphalt pavement according to the present invention comprises a spreading step of spreading an aggregate over a floor slab; a mixing step of obtaining a binder mixture by adding and mixing an alkaline additive to and with a binder containing an asphalt and a lubricative solidification material; a filling step of pouring the binder mixture into a place where the aggregate is spread; and a curing step of curing the aggregate and the binder mixture to obtain a paved body. The method for repairing asphalt pavement according to the present invention is particularly suitably used in repair of base layers of asphalt pavements.

As the aggregate, those usually used in the asphalt for pavement can be appropriately used. A preferred aggregate used is a single-sized crushed stone, and more preferred is a single-sized crushed stone in which the mass percentage of the single-sized crushed stone passing through a 4.75-mm sieve, which is a ratio of particles passing through a sieve having an opening of 4.75 mm, is 3% or less. For example, #5 crushed stone having a particle size of 20 to 13 mm or #6 crushed stone having a particle size of 13 to 5 mm can be suitably used. When the single-sized crushed stone is used as the aggregate, the upper limit of the particle size is not particularly limited. However, preferably, the mass percentage of the aggregate passing through a 26.5-mm sieve is 95% or more. By using a single-sized crushed stone having a particle size within the above ranges as the aggregate, when the aggregate is spread over the floor slab, continuous gaps of a size through which the binder can pass can be formed inside the layer composed of the aggregate. Thereby, the binder poured into the aggregate can flow to a lower portion of the place to be repaired through these gaps and reach to the floor slab. This can enhance the adhesiveness between the paved body to be obtained and the floor slab, and thus enhance the watertightness of the paved body.

The binder contains an asphalt, and the asphalt to be used can be a straight asphalt, a modified asphalt, and the like. From the viewpoint of improving the flexibility of the paved body to be obtained, use of a modified asphalt is preferred. The modified asphalt to be used can be a straight asphalt to which a modifier is added. The modifier to be used can be those containing a thermoplastic elastomer, such as SBS, and a mineral oil. The content of the thermoplastic elastomer in the modifier is preferably 10 to 50% by weight, more preferably 15 to 40% by weight. The content of the mineral oil in the modifier is preferably 50 to 90% by weight, more preferably 60 to 85% by weight. Besides the thermoplastic elastomer described above, the modifier may optionally contain a thermoplastic resin, other additives, and the like. The content of the modifier in the modified asphalt is preferably 1 to 40% by weight, more preferably 10 to 25% by weight. When the content of the modifier falls within the above ranges, a paved body having enhanced flexibility can be obtained. The content of the asphalt in the binder is preferably 1 to 70% by weight, more preferably 10 to 60% by weight, still more preferably 20 to 40% by weight.

The binder contains a lubricative solidification material in addition to the above-mentioned asphalt. Examples of the lubricative solidification material include, but should not be limited to, those containing a tall oil fatty acid and/or a tall oil fatty acid ester, a C6-C30 saturated fatty acid, a C12-C24 unsaturated fatty acid, a C6-C30 branched saturated fatty acid, and a fatty acid such as a dimer acid. These may be used alone or in combination.

The tall oil fatty acid contains fatty acids. Examples of the fatty acids constituting the tall oil fatty acid include palmitic acid, stearic acid, oleic acid, linoleic acid (including conjugated linoleic acid), and the like. The proportions of the components in the fatty acids constituting the tall oil fatty acid are not particularly limited, but the following proportions are preferred.
palmitic acid: preferably 0.5 to 10% by weight, more preferably 1 to 6% by weight
stearic acid: preferably 0.5 to 8% by weight, more preferably 1 to 4% by weight
oleic acid: preferably 15 to 65% by weight, more preferably 30 to 50% by weight
linoleic acid (including conjugated linoleic acid): preferably 15 to 70% by weight, more preferably 30 to 45% by weight

The tall oil fatty acid is derived from natural products, and thus may contain a resin acid in addition to the above-mentioned fatty acids. Examples of the resin acid contained in the tall oil fatty acid include rosin containing any one or more of abietic acid, dehydroabietic acid, neoabietic acid, pimaric acid, isopimaric acid, and palustric acid; and the like.

When the lubricative solidification material to be used is a mixture of a C6-C30 saturated fatty acid and a C12-C24 unsaturated fatty acid, from the viewpoint of enhancing the strength, durability, and flexibility of the paved body to be obtained, the weight ratio of the content of the saturated fatty acid to the content of the unsaturated fatty acid, **i.e.,** "saturated fatty acid:unsaturated fatty acid" is preferably 1:99 to 20:80, more preferably 2:98 to 15:85, still more preferably 3:97 to 12:88.

Specifically, the mixture of a C6-C30 saturated fatty acid and a C12-C24 unsaturated fatty acid is preferably a mixture of palmitic acid, stearic acid, oleic acid, linoleic acid, and linolenic acid, which are contained, preferably, in the following proportions.
palmitic acid: preferably 1 to 15% by weight, more preferably 2 to 13% by weight, still more preferably 3 to 12% by weight, further still more preferably 8 to 12% by weight
stearic acid: preferably 0.3 to 10% by weight, more preferably 0.5 to 7% by weight, still more preferably 0.8 to 6% by weight, further still more preferably 3 to 5.5% by weight
oleic acid: preferably 20 to 59% by weight, more preferably 30 to 55% by weight, still more preferably 39 to 48% by weight, further still more preferably 40 to 43% by weight
linoleic acid: preferably 20 to 60% by weight, more preferably 30 to 48% by weight, still more preferably 36 to 43% by weight, further still more preferably 36 to 39% by weight
linolenic acid: 1 to 15% by weight, preferably 3 to 12% by weight, more preferably 4 to 10% by weight, still more preferably 5 to 8% by weight, further still more preferably 5.5 to 7.5% by weight

Preferably, the mixture of palmitic acid, stearic acid, oleic acid, linoleic acid, and linolenic acid further contains palmitoleic acid, and the content of palmitoleic acid is preferably 0.3 to 2% by weight, more preferably 0.5 to 1.5% by weight, still more preferably 0.8 to 1.2% by weight.

It is supposed that linoleic acid also encompasses conjugated linoleic acid, which is an isomer having conjugated double bonds, and that linolenic acid encompasses both α-linolenic acid and γ-linolenic acid.

The branched saturated fatty acid used as the lubricative solidification material can be any C6-C30 branched saturated fatty acid. Preferred are C6-C24 branched saturated fatty acids, and more preferred are C6-C20 branched saturated fatty acids. From the viewpoint of further enhancing the flexibility, still more preferred are C6-C12 branched saturated fatty acids, and particularly preferred are C6-C10 branched saturated fatty acids. Alternatively, from the viewpoint of achieving an excellent balance between the handling properties and the flexibility, C16-C20 branched saturated fatty acids are particularly preferred. The branched saturated fatty acid used as the lubricative solidification material preferably has a melting point of 40°C or lower, more preferably 25°C or lower (liquid at ambient temperature) from the viewpoint of further enhancing the handling properties.

It is sufficient that the C6-C30 branched saturated fatty acid is a C6-C30 saturated fatty acid having a structure including a side chain structure or branched structure containing at least an alkyl group. The C6-C30 branched saturated fatty acid may be derived from natural products or may be a product obtained by synthesis. When a plurality of structural isomers are present, the C6-C30 branched saturated fatty acid may contain such a plurality of structural isomers. Specific examples of the C6-C30 branched saturated fatty acid include isoheptanoic acid, octylic acid, isononanoic acid, isodecylic acid, isotridecylic acid, isopalmitic acid, isostearic acid, isomyristic acid, and the like. Among these, preferred are octylic acid and isostearic acid, and more preferred is isostearic acid from the viewpoint of enhancing crack resistance.

The C6-C30 branched saturated fatty acid may be used in combination with a C6-C30 linear saturated fatty acid and/or a C12-C24 unsaturated fatty acid. In this case where the total amount of the C6-C30 branched saturated fatty acid, the C6-C30 linear saturated fatty acid and/or the C12-C24 unsaturated fatty acid is regarded as 100% by weight, the content of the C6-C30 branched saturated fatty acid is preferably 10 to 90% by weight, more preferably 15 to 75% by weight, still more preferably 15 to 60% by weight, further still more preferably 15 to 40% by weight. The content of the C6-C30 linear saturated fatty acid and/or the C12-C24 unsaturated fatty acid is preferably 10 to 90% by weight, more preferably 25 to 85% by weight, still more preferably 40 to 85% by weight, further still more preferably 60 to 85% by weight. Although the linear saturated fatty acid can be any C6-C30 linear saturated fatty acids, preferred are C6-C24 linear saturated fatty acids, more preferred are C6-C20 linear saturated fatty acids, and still more preferred are C6-C14 linear saturated fatty acids. Although the unsaturated fatty acid can be any C12-C24 unsaturated fatty acids, preferred are C14-C20 unsaturated fatty acids, and more preferred are C14-C18 unsaturated fatty acids. When such an unsaturated fatty acid is used, a lubricative solidification material containing resin acid in addition to an unsaturated fatty acid may be used.

The dimer acid used as the lubricative solidification material is a fatty acid obtained by polymerizing a plant- or animal-derived unsaturated fatty acid or an ester thereof, and refining the product by distillation. Examples of unsaturated fatty acids used to obtain the dimer acid include plant-derived drying oil, semi-drying oil, or nondrying oil fatty acids, such as soybean oil fatty acid, tall oil fatty acid, tung oil fatty acid, flaxseed oil fatty acid, rice bran oil fatty acid, (dehydrated) castor oil fatty acid, cottonseed oil fatty acid, olive oil fatty acid, safflower oil fatty acid, (hydrogenated) palm oil/coconut oil fatty acid, and palm oil fatty acid; drying oil, semi-drying oil, or nondrying oil fatty acids such as beef tallow; and the like.

Although the dimer acid can be those mainly containing a dimer component (dimer acid), it may contain components usually inevitably contained during production of the dimer acid as a dimer, specifically, a monomer component (monomer acid) and a trimer component (trimer acid). In the present invention, products containing a monomer component (monomer acid) and a trimer component (trimer acid) in addition to a dimer component (dimer acid) are regarded as the dimer acid as a whole.

The content of the dimer component in the dimer acid is preferably 60% by weight or more, more preferably 65% by weight or more, still more preferably 70% by weight or more. The upper limit of the content of the dimer component is not particularly limited, and is usually 99% by weight or less.

The content of the monomer component in the dimer acid is preferably 20% by weight or less, more preferably 15% by weight or less, still more preferably 10% by weight or less. The upper limit of the content of the monomer component is not particularly limited, and is usually 0.5% by weight or more. Furthermore, the content of the trimer component is preferably 30% by weight or less, more preferably 25% by weight or less, still more preferably 20% by weight or less. The upper limit of the content of the trimer component is not particularly limited, and is usually 0.5% by weight or more.

The dimer acid is preferably obtained by polymerizing a C8-C24 unsaturated fatty acid, and refining the product by distillation, and is more preferably obtained by polymerizing a C18 unsaturated fatty acid, and refining the product by distillation. In other words, particularly preferably, the dimer acid contains a dimer component having 36 carbon atoms as the main component and contains a monomer component having 18 carbon atoms and a trimer component having 54 carbon atoms. In particular, the dimer acid is particularly suitably a product obtained by polymerizing a tall oil fatty acid containing a C18 unsaturated fatty acid as the main component and/or a tall oil fatty acid ester, followed by refining by distillation.

As described above, a variety of compounds can be used as the lubricative solidification material. From the viewpoint of improving the handling properties of the binder at ambient temperature and obtaining a paved body having further enhanced adhesiveness to the floor slab and further enhanced flexibility, the lubricative solidification material to be used is particularly preferably a mixture of a tall oil fatty acid and/or a tall oil fatty acid ester with a C6-C30 branched saturated fatty acid.

When a mixture of a tall oil fatty acid and/or a tall oil fatty acid ester with a C6-C30 branched saturated fatty acid is used as the lubricative solidification material, the weight ratio of the contents of these, "tall oil fatty acid and/or tall oil fatty acid ester:C6-C30 branched saturated fatty acid" is preferably 10:90 to 90:10, more preferably 30:70 to 90:10, still more preferably 50:50 to 90:10. When the ratio of the content of a tall oil fatty acid and/or a tall oil fatty acid ester to the content of a C6-C30 branched saturated fatty acid falls within the above ranges, a paved body having a better balance of flexibility and adhesiveness to the floor slab can be obtained. The ratio of the content of a tall oil fatty acid and/or a tall oil fatty acid ester to the content of a C6-C30 branched saturated fatty acid in the lubricative solidification material is preferably adjusted according to the range of the particle size of the aggregate used in paving. For example, when #5 crushed stone having a particle size of 20 to 13 mm is used as the aggregate, the weight ratio of the content of a tall oil fatty acid and/or a tall oil fatty acid ester to the content of a C6-C30 branched saturated fatty acid is preferably 40:60 to 80:20, more preferably 50:50 to 70:30. When #6 crushed stone having a particle size of 13 to 5 mm is used as the aggregate, the weight ratio of the content of a tall oil fatty acid and/or a tall oil fatty acid ester to the content of a C6-C30 branched saturated fatty acid is preferably 50:50 to 90:10, more preferably 60:40 to 80:20.

The strength of the binder used in the present invention is enhanced by adding an alkaline additive and a hardening accelerator during paving to cause a saponification reaction or a neutralization reaction of the lubricative solidification material with an alkali component derived from the alkaline additive. Examples of the alkaline additive include ordinary Portland cement and the like. Examples of the hardening accelerator include water and the like. Here, the saponification reaction or the neutralization reaction in the present invention can be any reaction to generate a fatty acid alkali salt. Examples thereof include a saponification method of adding alkaline water to a fatty acid ester to generate a fatty acid alkali salt (soap) and glycerol, a neutralization method of neutralizing a fatty acid with alkaline water, and the like. When the alkaline additive is added in the form of a solid in the saponification reaction, usually, the reaction does not start unless a solvent such as water is present. On the other hand, when a solvent such as water is present, the solvent causes a reaction (saponification reaction or neutralization reaction) of "fatty acid in lubricative solidification material + alkaline additive + water = soap (solid)" to generate a soap, which then causes the development of strength.

The weight ratio of the content of the asphalt to the content of the lubricative solidification material, **i.e.,** "asphalt:lubricative solidification material" in the binder is preferably in the range of 10:90 to 90:10, more preferably 20:80 to 40:60. As the amount of the lubricative solidification material to be added increases, the usable temperature range also becomes broader. Thus, the amount of the lubricative solidification material to be added is preferably determined according to the paving conditions.

The lubricative solidification material used in the present invention can have any acid value, and the acid value is preferably 130 to 380 mg KOH/g, more preferably 150 to 320 mg KOH/g, still more preferably 160 to 280 mg KOH/g.

The binder can contain other additives usually used in the field of asphalt pavement, in addition to the above materials. Examples of such additives include, but should not be limited to, fillers, plant fibers, pigments, antifreezing agents, and the like.

Fig. 1(a) to Fig. 1(d) are schematic cross-sectional views for illustrating the method for repairing asphalt pavement. Fig. 1(a) is a schematic cross-sectional view showing a target to be paved (place to be repaired R), Fig. 1(b) is a schematic cross-sectional view showing a step of applying an adhesive 10, Fig. 1(c) is a schematic cross-sectional view showing a step of spreading an aggregate 20, and Fig. 1(d) is a schematic cross-sectional view showing a step of pouring a binder mixture 30.

Hereinafter, the steps in the method for repairing asphalt pavement according to the present invention will be described. The method for repairing asphalt pavement according to the present invention comprises a spreading step of spreading an aggregate over a floor slab; a mixing step of obtaining a binder mixture by adding and mixing an alkaline additive to and with a binder containing an asphalt and a lubricative solidification material; a filling step of pouring the binder mixture into a place where the aggregate is spread; and a curing step of curing the aggregate and the binder mixture to obtain a paved body.

Initially, as shown in Fig. 1(a), a place to be repaired R of asphalt pavement 2 disposed on a floor slab 1 such as a steel floor slab or a concrete floor slab is prepared. In the next step, as shown in Fig. 1(b), an adhesive 10 is preferably applied onto the floor slab 1 in the place to be repaired R and lateral surfaces of the asphalt pavement 2. The adhesive 10, when applied, can enhance the adhesiveness between a paved body to be obtained and the floor slab 1. The adhesive 10 is not particularly limited, and an epoxy resin adhesive is suitably used. The amount of the adhesive 10 applied is preferably 0.5 to 5.0 kg/m² relative to the area of the place to be repaired R.

Subsequently, as shown in Fig. 1(c), an aggregate 20 is spread over the place to which the adhesive 10 is applied. Examples of the method of spreading the aggregate 20 include, but should not be limited to, a method of placing the aggregate 20 onto the adhesive 10, and then adjusting the aggregate to a predetermined height using a trowel. The aggregate 20 used is preferably a single-sized crushed stone in which the mass percentage of the single-sized crushed stone passing through a 4.75-mm sieve is 3% or less, as described above. When a single-sized crushed stone having a particle size in the above range is used as the aggregate 20, gaps are formed between aggregates 20. When a binder mixture 30 described later is poured, the binder mixture 30 can flow through these gaps to a lower portion of the place to be repaired R and reach to the floor slab 1 (or the adhesive 10 applied to the floor slab 1). Thereby, a paved body having improved adhesiveness to the floor slab 1 and having enhanced watertightness can be obtained. From the viewpoint of appropriately hardening the binder mixture 30 described later, the aggregate 20 is preferably used in a dry state, and the temperature of the aggregate 20 is preferably 0 to 60°C.

In the next step, a binder stored in a pail or the like is preferably stirred. The binder can be stirred by any method without limitation, and can be stirred using a hand mixer, for example. The stirring time when a hand mixer is used is preferably 5 to 120 seconds, more preferably 10 to 60 seconds.

Subsequently, an alkaline additive is added to the binder, and the binder and the alkaline additive are mixed with stirring. The alkaline additive is used in an amount such that the weight ratio "binder:alkaline additive" is within the range of preferably 100:5 to 100:150, more preferably 100:15 to 100:40. The stirring time is preferably 10 to 180 seconds, more preferably 30 to 90 seconds.

The alkaline additive can be any compound as long as it provides an alkali component as a result of the action of a hardening accelerator (such as water). To neutralize the branched saturated fatty acid, desired are those providing a low hydrogen ion concentration (that is, a high pH) as a result of the action of the hardening accelerator. Although sodium hydroxide or potassium hydroxide usually used in soapmaking can also be used, among cements generally used as civil engineering materials, ordinary cement (ordinary Portland cement) which provides a low hydrogen ion concentration as a result of the action of the hardening accelerator is preferably used from the environmental viewpoint. The ordinary Portland cement used can be those which contain tricalcium silicate (3CaO·SiO₂), dicalcium silicate (2CaO·SiO₂), calcium aluminate (3CaO·Al₂O₃), calcium alumino ferrite (4CaO·Al₂O₃·Fe₂O₃), calcium sulfate (CaSO₄·2H₂O), or the like as the main component, for example. Besides these, an aqueous solution containing metal ions such as sodium ions (Na+), potassium ions (K+), magnesium ions (Mg²⁺), or calcium ions (Ca²⁺); a powder containing a metal salt which decomposes by addition of water to generate the above ions; and sodium hydrogen carbonate (NaHCO₃), potassium hydrogen carbonate (KHCO₃), or the like can be used as the alkaline additive.

Thereafter, water as a hardening accelerator is added to the mixture of the binder and the alkaline additive, and these are mixed with stirring to prepare a binder mixture 30. At this time, preferably, the temperature of the binder is measured before addition of water, and the stirring time is determined according to the temperature of the binder. For example, when the binder temperature is 0°C, the stirring time is preferably 80 to 100 seconds. When the binder temperature is 10°C, the stirring time is preferably 40 to 80 seconds. When the binder temperature is 20°C or higher, the stirring time is preferably 20 to 40 seconds.

When the binder and the like are stirred with a hand mixer, a hand mixer having an appropriately stirring ability is preferably used from the viewpoint of controlling the neutralization reaction caused by adding the alkaline additive and the lubricative solidification material to the binder and ensuring a long pot life of the binder mixture 30 and a long curing time thereof. For example, when a binder (inner volume: 7 to 11 L) stored in a pail (diameter: 25 to 30 cm) is stirred, the stirring is preferably performed using a low speed (300 to 500 rpm) hand mixer including a screw having a diameter of 15 to 20 cm, more preferably a hand mazelar available from Hitachi Koki Co., Ltd. (type: UM22, 400 rpm, shaft type: B1, holder type: A, screw type: B1, screw diameter: 18 cm).

Subsequently, as shown in Fig. 1(d), the binder mixture 30 is poured into the place where the aggregate 20 is spread, thereby filling the place to be repaired R with the binder mixture 30. The amount of the binder mixture 30 used is preferably 10 to 50 parts by weight, more preferably 20 to 40 parts by weight relative to 100 parts by weight of the aggregate 20. When the amount of the binder mixture 30 used falls within the above ranges, the gaps formed between the aggregates 20 spread can be completely filled with the binder mixture 30, and a paved body having enhanced adhesiveness to the floor slab and watertightness can be obtained.

Preferably, in consideration of the pot life, the binder mixture 30 is poured immediately after the completion of stirring. The pot life of the binder mixture 30 becomes shorter as the temperature of the binder increases. For example, when the temperature of the binder mixture 30 is 0 to 20°C, the binder mixture is poured preferably within about 6 minutes. When the temperature of the binder mixture 30 is 21 to 30°C, the binder mixture is poured preferably within about 4 minutes. When the temperature of the binder mixture 30 is 31 to 40°C, the binder mixture is poured preferably within about 2 minutes. Preferably, after the binder mixture 30 is poured, the surface shape of a layer formed of the aggregate 20 and the binder mixture 30 is leveled using a trowel or the like.

Finally, the layer formed of the aggregate 20 and the binder mixture 30 is cured at 0 to 40°C for 30 minutes to 120 minutes, thereby obtaining a paved body containing the aggregate 20 and the binder mixture 30. Thus, repair of the asphalt pavement is completed. The steps described above are preferably performed under a condition where the air temperature is 0 to 30°C. This is because hardening of the binder mixture 30 is difficult when the air temperature becomes below 0°C, and the pot life of the binder mixture 30 becomes extremely short when the air temperature exceeds 30°C.

As described above, in the method for repairing asphalt pavement according to the present invention, paving is performed by pouring the binder mixture 30 into the place where the aggregate 20 is spread. Since such a method allows paving by preparing the aggregate and the binder only in needed amounts depending on the scale of repair, production of waste materials during repairing of the asphalt pavement can be suppressed, leading to a reduction in cost of repairs. In addition, because paving can be performed at ambient temperature (0 to 40°C) without a special machine for paving, such as a cooker vehicle, the asphalt pavement can be repaired by a simple method.

The method for repairing asphalt pavement according to the present invention can be suitably used in repair of waterproof layers for pot holes, repair of broken waterproof layers found by surface layer cutting in repair construction, and small-scale asphalt pavements, in particular. After repair is performed by the repairing method according to the present invention, preferably, the surface layer is formed on the paved body containing the aggregate 20 and the binder mixture 30 using a heating mixture, an ambient temperature repair material, or the like.

The embodiment described above is illustrated to facilitate understanding of the present invention, and should not be construed as limitations to the present invention. Accordingly, it is intended that components disclosed in the above embodiment also cover all the modifications in design and equivalents thereof belonging to the technical scope of the present invention.

### EXAMPLES

Hereinafter, the present invention will be described in more detail with reference to Examples, but the present invention is not limited to these Examples.

### <Example 1>

1.5 Parts by weight of a modifier (trade name "ASTAS", available from Nissin-Kasei Co., Ltd., containing about 20% by weight of a styrenebutadiene thermoplastic elastomer and about 60% by weight of mineral oil) was mixed with 5.8 parts by weight of a straight asphalt using a stirring machine or a mixer (stirrer), giving a modified asphalt (straight asphalt:modifier = 80:20 (weight ratio)). To this modified asphalt, 12.7 parts by weight of a tall oil fatty acid (trade name "HARTALL FA-1", available from Harima Chemicals Group, Inc.) and 4.3 parts by weight of isostearic acid (trade name "Isostearic Acid R", available from MIYOSHI OIL & FAT CO., LTD.) were added (tall oil fatty acid:isostearic acid = 75:25 (weight ratio)), giving a binder. In this time, the heating temperature of the asphalt was 160 to 175°C, and the heating temperatures of others were ambient temperature.

The tall oil fatty acid (trade name "HARTALL FA-1", available from Harima Chemicals Group, Inc.) used in Example 1 as a lubricative solidification material have the following properties.
· "unsaturated fatty acid:resin acid" = 98.5:1.5 (weight ratio)
· content of unsaponifiable matter: 2.0% by weight
· ratio of unsaturated fatty acid components: palmitic acid: 1 to 3% by weight, stearic acid: 1 to 3% by weight, oleic acid: 40 to 50% by weight, linoleic acid: 35 to 45% by weight
· type of resin acid: rosin
· acid value: 194 mg KOH/g
· melting point: 25°C or lower (liquid at ambient temperature)

The isostearic acid (trade name "Isostearic Acid R", available from MIYOSHI OIL & FAT CO., LTD.) used in Example 1 as a lubricative solidification material has the following properties.
· acid value: 191.1 mg KOH/g
· iodine number: 4.7
· melting point: 25°C or lower (liquid at ambient temperature)

In the next step, a mold (framework) emulating the place to be repaired R was prepared, and an aggregate 20 (#5 crushed stone, particle size: 20 to 13 mm) was placed into the mold, and spread.

Then, ordinary Portland cement as an alkaline additive was added to the binder heated to 20°C, and these were mixed by stirring with a hand mixer for 60 seconds. Further, water as a hardening accelerator was added, followed by stirring for 30 seconds to prepare a binder mixture 30. The binder mixture 30 was poured into the mold where the aggregate 20 was spread, and the mold was filled with the binder mixture. Further, curing was performed at a temperature of 20°C and a humidity of 60% for 7 days, obtaining a test piece. The obtained test piece was subjected to a bending test and an adhesion strength test below. The ratios of the components compounded are as shown in Table 1.

### (Bending test)

The test piece obtained above was subjected to a bending test at a test temperature of -10°C in accordance with the "Paving Investigation/Testing Method Handbook B005" ("Hosou Chosa/Shikenhou Binran" in Japanese) to determine strain at break (bending strain, [× 10⁻³mm/mm]). In the bending test, higher strain at break (bending strain) is preferred because it indicates excellent flexibility and a lower frequency of cracks. The results of the bending test are shown in Table 1.

### (Tensile adhesion strength test)

Another mold provided with a simulated concrete floor slab was prepared, and the test piece obtained above and the concrete floor slab were bonded with an epoxy adhesive. The bonded product was subjected to a tensile test at test temperatures of 23°C and -10°C in accordance with "Bridge Floor Slab Waterproofing Handbook" ("Dorokyo Shooban Bousui Binran" in Japanese) to determine tensile adhesion strength [N/mm²]. The results are shown in Table 1.

### <Example 2>

An asphalt composition and a mixture for pavement were obtained in the same manner as in Example 1 except that the ratio of the tall oil fatty acid and isostearic acid used was changed to 60:40 (weight ratio), and a test piece was produced and evaluated likewise.

### <Example 3>

An asphalt composition and a mixture for pavement were obtained in the same manner as in Example 1 except that the ratio of the tall oil fatty acid and isostearic acid used was changed to 45:55 (weight ratio), and a test piece was produced and evaluated likewise.

### <Example 4>

An asphalt composition and a mixture for pavement were obtained in the same manner as in Example 1 except that the ratio of the tall oil fatty acid and isostearic acid used was changed to 75:25 (weight ratio) and #6 crushed stone (particle size: 13 to 5 mm) was used as the aggregate, and a test piece was produced and evaluated likewise.

### <Example 5>

An asphalt composition and a mixture for pavement were obtained in the same manner as in Example 2 except that the ratio of the tall oil fatty acid and isostearic acid used was changed to 60:40 (weight ratio), and a test piece was produced and evaluated likewise.

### <Example 6>

An asphalt composition and a mixture for pavement were obtained in the same manner as in Example 1 except that the ratio of the straight asphalt and the modifier used was changed to 90:10 (weight ratio), and a test piece was produced and evaluated likewise.

### <Example 7>

An asphalt composition and a mixture for pavement were obtained in the same manner as in Example 1 except that the ratio of the straight asphalt and the modifier used was changed to 100:0 (weight ratio), and a test piece was produced and evaluated likewise.

### [Table 1]

**Table 1**

| | | Composition (parts by weight) | | | | | | | | Evaluations | | |
|---|---|---|---|---|---|---|---|---|---|---|---|---|
| | | Asphalt composition | | | | Alkaline additive | Hardening accelerator | Aggregate | | Bending strain at break | Tensile adhesion strength | |
| | | Asphalt | | Lubricative solidification material | | Ordinary Portland cement | Water | Type | Amount used | | | |
| | | Straight asphalt | Modifier | Tall oil fatty acid | Isostearic acid | | | | | [×10⁻³mm/mm] | [N/mm²] | |
| | | | | | | | | | | | 23°C | -10°C |
| Examples | 1 | 5.8 | 1.5 | 12.7 | 4.3 | 6.8 | 0.2 | #5 crushed stone | 100 | 10.8 | 1.23 | 2 |
| | 2 | 5.8 | 1.5 | 10.2 | 6.8 | 6.8 | 0.2 | #5 crushed stone | 100 | 15.2 | 0.97 | 1.56 |
| | 3 | 5.8 | 1.5 | 7.6 | 9.4 | 6.8 | 0.2 | #5 crushed stone | 100 | 18.8 | 1.21 | 1.25 |
| | 4 | 5.9 | 1.5 | 12.8 | 4.3 | 6.9 | 0.2 | #6 crushed stone | 100 | 17.2 | 0.95 | 1.74 |
| | 5 | 5.9 | 1.5 | 10.2 | 6.9 | 6.9 | 0.2 | #6 crushed stone | 100 | 26.4 | 0.73 | 1.41 |
| | 6 | 6.6 | 0.7 | 12.7 | 4.3 | 6.8 | 0.2 | #5 crushed stone | 100 | 9.2 | - | - |
| | 7 | 7.3 | 0.0 | 12.7 | 4.3 | 6.8 | 0.2 | #5 crushed stone | 100 | 8.2 | - | - |

### Reference Signs List

- 1: floor slab

- 2: asphalt pavement
- 10: adhesive
- 20: aggregate
- 30: binder mixture
- R: place to be repaired

## Claims

1. A method for repairing asphalt pavement comprising:
a spreading step of spreading an aggregate over a floor slab;
a mixing step of obtaining a binder mixture by adding and mixing an alkaline additive to and with a binder containing an asphalt and a lubricative solidification material;
a filling step of pouring the binder mixture containing the asphalt into a place where the aggregate is spread; and
a curing step of curing the aggregate and the binder mixture to obtain a paved body.

2. The method for repairing asphalt pavement according to claim 1, wherein the aggregate used is a single-sized crushed stone in which the mass percentage of the single-sized crushed stone passing through a 4.75-mm sieve is 3% or less.

3. The method for repairing asphalt pavement according to claim 1 or 2, wherein in the filling step, the binder mixture is poured in an amount of 10 to 50 parts by weight relative to 100 parts by weight of the aggregate spread over the floor slab.

4. The method for repairing asphalt pavement according to claim 1 or 2, wherein the lubricative solidification material contains a fatty acid.

5. The method for repairing asphalt pavement according to claim 1 or 2, wherein the lubricative solidification material contains a tall oil fatty acid and/or a tall oil fatty acid ester.

6. The method for repairing asphalt pavement according to claim 1 or 2, wherein the lubricative solidification material contains a C6-C30 branched saturated fatty acid.
